(19) Europäisches Patentamt
European Patent Office
Office européen des brevets

(11) **EP 2 628 162 B1**

(12) **EUROPEAN PATENT SPECIFICATION**

(45) Date of publication and mention of the grant of the patent:
**22.04.2020 Bulletin 2020/17**

(21) Application number: **11745552.7**

(22) Date of filing: **17.08.2011**

(51) Int Cl.:
***H01B 1/24*** *(2006.01)*

(86) International application number:
**PCT/EP2011/064149**

(87) International publication number:
**WO 2012/048927 (19.04.2012 Gazette 2012/16)**

(54) **SEMICONDUCTIVE POLYMER COMPOSITION**

HALBLEITENDE POLYMERZUSAMMENSETZUNG

COMPOSITION DE POLYMÈRE SEMI-CONDUCTRICE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.10.2010 EP 10187681**

(43) Date of publication of application:
**21.08.2013 Bulletin 2013/34**

(73) Proprietor: **Borealis AG**
**1220 Vienna (AT)**

(72) Inventors:
- **JAMIESON, John**
  **06100 Porvoo (FI)**
- **SMEDBERG, Annika**
  **SE-471 61 Myggenäs (SE)**
- **SVANBERG, Christer**
  **S-42834 Kållered (SE)**
- **ÖSTLUND, Jenny-Ann**
  **S- 14931 Nynäshamn (SE)**
- **FAGRELL, Ola**
  **SE-444 45 Stenungsund (SE)**
- **NYLANDER, Perry**
  **S-41261 Göteborg (SE)**
- **UEMATSU, Takashi**
  **S-44442 Stenungsund (SE)**
- **HJERTBERG, Thomas**
  **S-45691 Kungshamn (SE)**
- **STEFFL, Thomas**
  **DE - 91207 Lauf (DE)**

(74) Representative: **Dehns**
**St. Bride's House**
**10 Salisbury Square**
**London EC4Y 8JD (GB)**

(56) References cited:
**EP-A1- 1 849 824**
**WO-A1-2006/007927**
**WO-A2-02/073630**
**US-A1- 2005 020 775**
**US-A1- 2009 114 417**

- **DATABASE WPI Week 198034 Thomson Scientific, London, GB; AN 1980-59631C XP002638209, & JP 55 091505 A (DAINICHI NIPPON CABLES LTD) 11 July 1980 (1980-07-11)**
- **Chemtura: "Naugard N445 Technical information", , 2007, XP002638207, Retrieved from the Internet: URL:http://www.chemtura.com/deployedfiles/staticfiles/businessunits/polymer_additives-en-us/TechnicalDataSheets/files/Naugard%20445%20TDS.pdf/Naugard%20445%20TDS.pdf [retrieved on 2011-05-20]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 628 162 B1

## Description

The present invention relates to a use of an organic compound, 4,4'-bis(1,1'-dimethylbenzyl)diphenylamine, in a semiconductive composition for decreasing the volume resistivity of a semiconductive polymer composition.

A cable in wire and cable (W&C) applications comprises typically at least one conductor surrounded by one or more layers of polymeric materials. The cables are commonly produced by extruding the layers on a conductor. One or more of said layers are then often crosslinked to improve i.a. deformation resistance at elevated temperatures, as well as mechanical strength and/or chemical resistance, of the layer(s) of the cable.

Power cable is defined to be a cable transferring energy operating at any voltage level. The voltage applied to the power cable can be alternating (AC), direct (DC) or transient (impulse).

Medium voltage (MV), high voltage (HV) and extra high voltage (EHV) power cables, and in some embodiments also LV power cables, comprise a conductor surrounded at least by an inner semiconductive layer, an insulation layer and an outer semiconductive layer, in that order. MV and HV cables operate at any voltage levels used for other applications than for low voltages. A typical MV cable, usually operates at voltages from 3 to 36 kV, a typical HV cable at voltages higher than 36 kV and EHV cable even at higher voltages.

When producing power cables containing semiconductive layer(s), strong shear force is generated by the extruder which in turn destructs the percolating network of carbon black and as a result can often cause instability problems in the conductivity of the formed semiconductive layer(s). For example, the instability limits the production efficiency for MV cable due to the restricted extrusion speed. When loading level of carbon black is increased to compensate the loss of conductivity, the processiblity performance will be reduced due to increased viscosity.

Concerning HV and EHV cables, high stability of the conductivity of a semiconductive layer is of great importance. However, it is desirable to keep the amount of carbon black as low as possible due to the abovementioned processability problems and also in order to provide an acceptable surface smoothness property required in wire and cable applications.

Diphenyl amines and diphenyl sulphides are well known additives and conventionally used as antioxidants in wire and cable applications. E.g. WO2006007927 of Borealis is directed to a semiconductive composition with improved SIED (Stress Induced Electrohemical Degradation) resistancy and thus improves water tree resistancy (WTR) which is a well known undesired phenomen in wire and cable applications. Accordingly said WO '927 is solves the problem relating to the SIED property by providing a certain polymer composition. WO '927 also states that antioxidants, if used, are preferably diphenyl amines and diphenyl sulphides which are used in an optimum amount needed to minimise the SIED problems, but still achieving acceptable ageing properties. The optimum amounts of the used antioxidants and the carbon black are typical in the prior art.

The object of the present invention is to provide a further semiconductive polymer composition with improved conductivity stability after the extrusion of the composition.

## Description of the invention

The invention is directed to use of an organic compound (b) which is 4,4'-bis(1,1'-dimethylbenzyl)diphenylamine to decrease the volume resistivity of a polymer composition for a semiconductive layer of a cable, wherein the polymer composition comprises:

- a polyolefin (a) which is an LDPE homopolymer or copolymer; and
- a carbon black which is selected from any of a furnace carbon black and acetylene carbon black having a nitrogen surface area (BET) of 5 to 400 $m^2/g$, determined according to ASTM D3037-93;

wherein the polymer composition comprises 9.5 to 49.5 wt% carbon black and 0.35 to 0.9 wt% of the organic compound (b) based on the total amount of the polymer composition.

Semiconductive polymer composition means herein that the polymer composition contains carbon black in a semiconductive amount. The term semiconductive polymer composition is a well known expression for polymer compositions used in semiconductive applications, such as in semiconductive layers of cables, as well known for a skilled person.

Polymerised TMQ means $(C_{12}H_{15}N)_n$ and is an often used additive in wire and cable field. The polymerized 2,1,4-trimethyl-1,2-dihydroquinoline (TMQ) used in the comparative polymer compositions herein has CAS number 26780-96-1 and a softening point of 80-135°C, when measured according to DIN 51 920 (Mettler). In this application Vulcanox® HS/LG supplier, Lanxess, with softening point of 85-95°C was used for the comparisons herein. Moreover, the volume resistivity method used in the volume resistivity determination is measured according to "The volume resistivity (VR) on cables" procedure as described below under the "Determination methods".

Molecular weight is given above, below or in claims as g/mol.

It has surprisingly found that the the organic compound (b) of the polymer composition, increases the conductivity, i.e. decreases the volume resistivity value, of the polymer composition comprising a semiconductive amount of carbon black, however without the need to increase the carbon black content or, preferably, even enables to decrease the amount of carbon black. Accordingly, the improvement in conductivity is marked so that the amount of carbon black can even be reduced compared to the same polymer composition, but wherein the compound (b) is replaced by TMQ. Preferably, also the conductivity stability after applying shear force to the polymer composition in an extruder is improved. Without binding to any theory it is believed that the above defined conjugation of the compound (b) contributes to the improved conductivity property. Moreover, the small molecular weight and the melting temperature of the compound (b) contribute to the improved conductivity property..

Moreover, it is believed that the organic compound (b) in amounts below 0.03 wt% provides no observable reduction effect of the volume resistivity of semiconductive polymer composition. And when the organic compound (b) is used in amounts above 0.9 wt%, then any observable additional volume resistivity reduction is not observed (due to the amount above the saturation level in a composition).

The amount of the organic compound (b) for the use of the invention is of 0.35 to 0.9 wt%, preferably of 0.35 to 0.8 wt%, more preferably of 0.3 to 0.75 wt%, based on the amount of the polymer composition.

The carbon black (CB) for the use of the invention is selected from any of a furnace carbon black and acetylene carbon black. The terms have a well known meaning. The furnace and acetylene carbon blacks thus exclude the Ketjen carbon black which term also have a well known meaning and has a specific particle structure with very high surface area.

Accordingly, the use of the organic compound (b) is for decreasing the volume resistivity of a polymer composition of a semiconductive layer of a cable, wherein the polymer composition is as defined in claim 1.

The polymer composition as defined above or below and the semiconductive polymer composition for the use of the invention as defined above or below are referred herein commonly as "polymer composition". The organic compound (b) as defined above or below is referred herein also shortly as "compound (b)".

The below preferred subgroups and embodiments of the independent polymer composition and the components thereof, as well as the cable comprising said polymer composition, apply also for the above use of the organic compound (b) of the invention.

Preferably, the polymer composition comprises the organic compound (b) in amount of 0.35 to 0.8 wt%, most preferably of 0.35 to 0.75 wt%, based on the amount of the polymer composition.

Accordingly, if desired, the invention enables to use carbon black, based on the total amount of the polymer composition, in at least 0.5 wt %, preferably in at least 1 wt%, more preferably in at least 5 wt%, lower amount than a same polymer composition with the same volume resistivity, except that it comprises the same amount of polymerized 2,2,4-trimethyl-1,2-dihydroquinoline (TMQ) in place of the organic compound (b).

Moreover, if desired, the invention enables to provide a volume resistivity, which is at least 10% lower volume resistivity than a same polymer composition, except that it comprises the same amount of polymerized 2,2,4-trimethyl-1,2-dihydroquinoline (TMQ) in place of the organic compound (b).

The polymer composition may naturally comprise further components, such as further polymer component(s), like miscible thermoplastic(s); or further additive(s), any of antioxidant(s), scorch retarder(s) (SR), water treeing retardant additive(s), crosslinking booster(s), stabiliser(s), like voltage stabilizer(s), flame retardant additive(s), acid, ion scavenger(s), further filler(s), processing aid(s), like lubricant(s), foaming agent(s) or colorant(s), as known in the polymer field. The additives depend on the type of the layer, e.g. whether semiconductive or insulation layer, and can be selected by a skilled person.

The total amount of further additive(s), if present, is generally from 0.01 to 10 wt%, preferably from 0.05 to 7 wt%, more preferably from 0.2 to 5 wt%, based on the total amount of the polymer composition..

The total amount of further polymer component(s), if present, is typically up to 60 wt%, preferably up 50 wt%, preferably up 40 wt %, more preferably from 0.5 to 30 wt%, preferably from 0.5 to 25 wt%, more preferably from 1.0 to 20 wt%, based on the total amount of the polymer composition.

The amount of polyolefin (a) in the polymer composition used in the invention is typically of at least 35 wt%, preferably of at least 40 wt%, preferably of at least 50 wt%, preferably of at least 75 wt%, more preferably of from 80 to 100 wt% and more preferably of from 85 to 100 wt%, based on the total amount of the polymer component(s) present in the polymer composition.

The preferred polymer composition consists of polyolefin (a) as the only polymer component(s). The expression means that the polymer composition does not contain further polymer components, but the polyolefin (a) as the sole polymer component. However, it is to be understood herein that the polymer composition may comprise further component(s) other than the polyolefin (a) component, such as additive(s) which may optionally be added in a mixture with a carrier polymer in so called master batch. Also the compound (b) or carbon black, or both, can be added in form of a master batch, wherein the carrier medium is a polymer. In such cases, too, the carrier polymer of such master batch is not calculated to the amount of the polymer components, but to the total amount of the polymer composition.

The polymer composition as defined in claim 1 is highly suitable as a layer material for a semiconductive layer of a power cable.

The following preferable embodiments, properties and subgroups of the polyolefin (a), the carbon black, the polymer composition and of the cable are independently generalisable so that they can be used in any order or combination to further define the preferable embodiments of the polymer composition and the article, preferably cable. Moreover, unless otherwise stated, it is evident that the given polyolefin descriptions apply to the polyolefin prior to optional crosslinking.

**Organic compound (b)**

The compound (b) is 4,4'-bis(1,1'-dimethylbenzyl)diphenylamine, CAS:10081-67-1

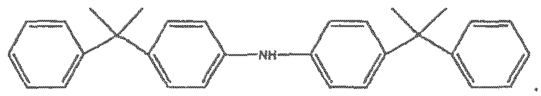

Such compound is commercially available e.g. under tradename Naugard 445 (supplied by Chemtura) or Sanox 445 (subblied by Safic-Alcan).

**Polyolefin (a)**

Where herein it is referred to a polyolefin this means both a homopolymer and copolymer of ethylene. The polyolefin copolymer may contain one or more comonomer(s).

As well known "comonomer" refers to copolymerisable comonomer units.

Ethylene will form the major monomer content present in any polyethylene polymer.

Polyolefin (a) is a homopolymer or a copolymer of ethylene produced in a high pressure polymerisation process.

The polyolefin (a) is a polyethylene produced in a high pressure polymerisation process, preferably by radical polymerisation in the presence of an initiator(s). The polyolefin (a) is a low density polyethylene (LDPE). It is to be noted that a polyethylene produced in a high pressure (HP) is referred to herein generally as LDPE and which term has a well known meaning in the polymer field. Although the term LDPE is an abbreviation for low density polyethylene, the term is understood not to limit the density range, but covers the LDPE-like HP polyethylenes with low, medium and higher densities. The term LDPE describes and distinguishes only the nature of HP polyethylene with typical features, such as high branching degree, compared to the PE produced in the presence of an olefin polymerisation catalyst.

The polyolefin (a) is an LDPE polymer which may be a low density homopolymer of ethylene (referred herein as LDPE homopolymer) or a low density copolymer of ethylene with one or more comonomer(s) (referred herein as LDPE copolymer). The one or more comonomers, if present, of LDPE copolymer are preferably selected from the polar comonomer(s), non-polar comonomer(s) or from a mixture of the polar comonomer(s) and non-polar comonomer(s), as defined below. Moreover, said LDPE homopolymer or LDPE copolymer as said polyolefin may optionally be unsaturated.

As an optional polar comonomer for the LDPE copolymer (polar LDPE copolymer) as polyolefin (a), comonomer(s) containing hydroxyl group(s), alkoxy group(s), carbonyl group(s), carboxyl group(s), ether group(s) or ester group(s), or a mixture thereof, can be used. More preferably, comonomer(s) containing carboxyl and/or ester group(s) are used as said polar comonomer, if present. Still more preferably, the optional polar comonomer(s) of LDPE copolymer is selected from the groups of acrylate(s), methacrylate(s) or acetate(s), or any mixtures thereof. If present in said LDPE copolymer, the polar comonomer(s) is preferably selected from the group of alkyl acrylates, alkyl methacrylates or vinyl acetate, or a mixture thereof. Further preferably, said polar comonomer(s) are selected from $C_1$- to $C_6$-alkyl acrylates, $C_1$- to $C_6$-alkyl methacrylates or vinyl acetate. Still more preferably, said polar LDPE copolymer is a copolymer of ethylene with $C_1$- to $C_4$-alkyl acrylate, such as methyl, ethyl, propyl or butyl acrylate, or any mixture thereof, more preferably a copolymer of ethylene with methyl, ethyl or butyl acrylate, or any mixture thereof.

As the optional non-polar comonomer(s) for the LDPE copolymer as the preferred polyolefin (a), comonomer(s) other than the above defined polar comonomers can be used. Preferably, the non-polar comonomers are other than comonomer(s) containing hydroxyl group(s), alkoxy group(s), carbonyl group(s), carboxyl group(s), ether group(s) or ester group(s). One group of preferable non-polar comonomer(s) comprise, preferably consist of, monounsaturated (= one double bond) comonomer(s), preferably olefins, preferably alpha-olefins, more preferably $C_3$ to $C_{10}$ alpha-olefins, such as propylene, 1-butene, 1-hexene, 4-methyl-1-pentene, styrene, 1-octene, 1-nonene; polyunsaturated (= more than one double bond) comonomer(s); a silane group containing comonomer(s); or any mixtures thereof.

Accordingly, the polyolefin (a) may optionally be unsaturated, i.e. the LDPE polymer may comprise carbon-carbon double bonds (-C=C-). Ifan LDPE homopolymer is unsaturated, then the unsaturation can be provided e.g. by a chain transfer agent (CTA), such as propylene, and/or by polymerization conditions. If an LDPE copolymer is unsaturated, then the unsaturation can be provided by one or more of the following means: by a chain transfer agent (CTA), by one

or more polyunsaturated comonomer(s) or by polymerisation conditions. The polyunsaturated comonomers suitable for the optional unsaturated polyolefin (a) preferably consist of a straight carbon chain with at least 8 carbon atoms and at least 4 carbons between the non-conjugated double bonds, of which at least one is terminal, more preferably, said polyunsaturated comonomer is a diene, preferably a diene which comprises at least eight carbon atoms, the first carbon-carbon double bond being terminal and the second carbon-carbon double bond being non-conjugated to the first one. Preferred dienes are selected from $C_8$ to $C_{14}$ non-conjugated dienes or mixtures thereof, more preferably selected from 1,7-octadiene, 1,9-decadiene, 1,11-dodecadiene, 1,13-tetradecadiene, 7-methyl-1,6-octadiene, 9-methyl-1,8-decadiene, or mixtures thereof. Even more preferably, the diene is selected from 1,7-octadiene, 1,9-decadiene, 1,11-dodecadiene, 1,13-tetradecadiene, or any mixture thereof.

If the LDPE polymer used as the polyolefin (a) is a copolymer, it preferably comprises up to 70 wt%, preferably up to 60 wt%, preferably 0.001 to 50 wt.-%, more preferably 0.05 to 40 wt.-%, still more preferably less than 35 wt.-%, still more preferably less than 30 wt.-%, more preferably less than 25 wt.-%, of one or more comonomer(s).

Typically, and preferably in wire and cable (W&C) applications, the density of the polyolefin (a is higher than 860 kg/$m^3$. Preferably the density of the LDPE homopolymer or copolymer is not higher than 960 kg/$m^3$, and preferably is from 890 to 945 kg/$m^3$.

The $MFR_2$ (2.16 kg, 190 °C) of the polyolefin (a) depends on the desired end use application as well known for a skilled person. Preferably, the $MFR_2$ (2.16 kg, 190 °C) of the polyolefin (a), preferably of the preferred LDPE, is preferably up to 1200 g/10 min, such as of up to 1000 g/10 min, preferably of up to 500 g/10 min, preferably of up to 400 g/10 min, preferably ofup to 300 g/10 min, preferably of up to 200 g/10 min, preferably of up to 150 g/10 min, preferably from 0.01 to 100, preferably from 0.05 to 75 g/10 min, preferably from 0.1 to 60 g/10 min, preferably of from 0.5 to 55 g/10 min, preferably of from 1 to 30 g/10 min.

The melting temperature of the polyolefin (a) is above 50 °C, more preferably above 60 °C and most preferably is 80°C or higher. The melting temperature of the polyolefin (a) is preferably below 125 °C, more preferably below 120 °C, more preferably below 115 °C.

In the most preferred embodiment of the polymer composition, the polyolefin (a) is a polar LDPE copolymer of ethylene with at least polar comonomer(s), as defined above or in the claims.

Accordingly, the polyolefin (a) used in the invention is a LDPE polymer, more preferably a polar LDPE copolymer, as defined above or in the claims, and is preferably produced at high pressure by free radical initiated polymerisation (referred to as high pressure (HP) radical polymerization). The HP reactor can be e.g. a well known tubular or autoclave reactor or a combination thereof, preferably a tubular reactor. The high pressure (HP) polymerisation and the adjustment of process conditions for further tailoring the other properties of the polyolefin depending on the desired end application are well known and described in the literature, and can readily be used by a skilled person. Suitable polymerisation temperatures range up to 400 °C, preferably from 80 to 350°C and pressure from 70 MPa, preferably 100 to 400 MPa, more preferably from 100 to 350 MPa. Pressure can be measured at least after compression stage and/or after the tubular reactor. Temperature can be measured at several points during all steps.

After the separation the obtained LDPE is typically in a form of a polymer melt which is normally mixed and pelletized in a pelletising section, such as pelletising extruder, arranged in connection to the HP reactor system. Optionally, additive(s), such as antioxidant(s), can be added in this mixer in a known manner.

Further details of the production of ethylene (co)polymers by high pressure radical polymerization can be found i.a. in the Encyclopedia of Polymer Science and Engineering, Vol. 6 (1986), pp 383-410 and Encyclopedia of Materials: Science and Technology, 2001 Elsevier Science Ltd.: "Polyethylene: High-pressure, R.Klimesch, D.Littmann and F.-O. Mähling pp. 7181-7184.

Carbon Black

Any furnace or acetylene carbon black can be used which is electrically conductive and provides semiconductive property needed for the seiconductive layer.

The carbon black has a nitrogen surface area (BET) of 5 to 400 $m^2$/g, preferably of 10 to 300 $m^2$/g, more preferably of 30 to 200 $m^2$/g, when determined according to ASTM D3037-93. Further preferably the carbon black has one or more of the following properties: i) a primary particle size of at least 5 nm which is defined as the number average particle diameter according to ASTM D3849-95a procedure D, ii) iodine absorption number (IAN) of at least 10mg/g, preferably of 10 to 300 mg/g, more preferably of 30 to 200 mg/g, when determined according to ASTM D-1510-07; and/or iii) DBP (dibutyl phthalate) absorption number of 60 to 300 $cm^3$/100g, preferably of 70 to 250 $cm^3$/100g, more preferably of 80 to 200, preferably of 90 to 180 $cm^3$/100g, when measured according to ASTM D 2414-06a. More preferably the carbon black has a nitrogen surface area (BET) and properties (i), (ii) and (iii) as defined above.

The amount of carbon black is at least such that a semiconducting composition is obtained. Depending on the desired use, the conductivity of the carbon black and conductivity of the composition, the amount of carbon black can vary within the claimed range.

The compound (b) as defined above reduces the volume resistivity value (i.e. increases the conductivity) of the polymer composition and enables to use the carbon black in at least 0.5 wt %, preferably in at least 1 wt%, more preferably in at least 5 wt%, lower amount than a same polymer composition with the same volume resistivity, except that it comprises 1 wt% or less of polymerized 2,2,4-tnmethyl-1,2-dihydroquinoline (TMQ) as defined above in place of the compound (b).

Furnace carbon black is generally acknowledged term for the well known carbon black type that is produced in a furnace-type reactor. As examples of carbon blacks, the preparation process thereof and the reactors, reference can be made to e.g. EP629222 of Cabot, US 4,391,789, US 3, 922,335 and US 3,401,020. Furnace carbon black is distinguished herein from acetylene carbon black which produced by reaction of acetylene and unsaturated hydrocarbons, e.g. as described in US 4,340,577.

Acetylene black is a generally acknowledged term and are very well known and e.g. supplied by Denka. They are produced in an acetylene black process.

Preferably, the polymer composition has a volume resistivity, measured at 90 °C according to ISO 3915 (1981), of less than 500,000 Ohm cm, more preferably less than 100,000 Ohm cm, even more preferably less than 50,000 Ohm cm. Volume resistivity is in a reciprocal relationship to electrical conductivity, i.e. the lower the resistivity, the higher is the conductivity.

The polymer composition of the present invention comprises, depending on the carbon black used, 9.5 to 49.5 wt%, preferably 9.5 to 49 wt%, more preferably 9.5 to 45 wt% carbon black, based on the weight of the polymer composition. However, the amount of the used carbon black is always lower compared to the amount needed when the polymerised TMQ as defined above is used in place of the compound (b).

## Polymer composition

The polymer composition can be non-crosslinkable, i.e. it is not crosslinked with any added crosslinking agent, or crosslinkable, and preferably is crosslinkable. It is preferred that the polyolefin (a) is a crosslinkable LDPE homopolymer or copolymer, more preferably a crosslinkable polar LDPE copolymer, as defined above or in claims, and is crosslinked before the end use.

Crosslinking can be effected by any feasible means, e.g. by free radical reaction using irradiation or preferably using a crosslinking agent which is a free radical generating agent; or by the incorporation of any types crosslinkable groups into polymer component(s), such as hydrolysable silane groups, into the polymer component(s) of the polymer composition, as known in the art.

In case the polymer composition is crosslinkable via hydrolysable silane groups, then the hydrolysable silane groups may be introduced into the polyolefin (a) by copolymerisation of olefin, preferably ethylene, monomer(s) with silane group containing comonomers or by grafting the polyolefin (a) with silane groups containing compounds, i.e. by chemical modification of the polyolefin (a) by addition of silane groups mostly in a radical reaction. Such silane groups containing comonomers and compounds are well known in the field and e.g. commercially available. The hydrolysable silane groups are typically then crosslinked by hydrolysis and subsequent condensation in the presence of a silanol-condensation catalyst and $H_2O$ in a manner known in the art. Also silane crosslinking technique is well known in the art. If silane crosslinking groups are used, then these are typically used in a semiconductive composition.

In a preferred embodiment, the LDPE polymer, most preferably the polar LDPE copolymer, as defined above or in claims, is crosslinkable and is crosslinked via free radical reaction by using, preferably, a peroxide.

The preferred crosslinking agent is peroxide. Non-limiting examples are organic peroxides, such as di-tert-amylperoxide, 2,5-di(tert-butylperoxy)-2,5-dimethyl-3-hexyne, 2,5-di(tert-butylperoxy)-2,5-dimethylhexane, tert-butylcumylperoxide, di(tert-butyl)peroxide, dicumylperoxide, butyl-4,4-di(tert-butylperoxy)-valerate, 1,1-di(tert-butylperoxy)-3,3,5-trimethylcyclohexane, tert-butylperoxybenzoate, dibenzoylperoxide, di(tert butylperoxyisopropyl)benzene, 2,5-dimethyl-2,5-di(benzoylperoxy)hexane, 1,1-di(tert-butylperoxy)cyclohexane, 1,1-di(tert amylperoxy)cyclohexane, or any mixtures thereof. Preferably, the peroxide is selected from 2,5-di(tert-butylperoxy)-2,5-dimethylhexane, di(tert-butylperoxyisopropyl)benzene, dicumylperoxide, tert-butylcumylperoxide, di(tert-butyl)peroxide, or mixtures thereof.

The polymer composition can be produced before or after, preferably before, the use in cable production line.

## End use of the polymer composition

The invention also provides use of an organic compound (b) which is 4,4'-bis(1,1'-dimethylbenzyl)diphenylamine to decrease the volume resistivity of a polymer composition for a semiconductive layer of a cable, wherein the polymer composition comprises:

- a polyolefin (a) which is an LDPE homopolymer or copolymer; and
- a carbon black which is selected from any of a furnace carbon black and acetylene carbon black having a nitrogen

surface area (BET) of 5 to 400 $m^2$/g, determined according to ASTM D3037-93;

wherein the polymer composition comprises 9.5 to 49.5 wt% carbon black and 0.35 to 0.9 wt% of the organic compound (b) based on the total amount of the polymer composition,
wherein the polymer composition forms part of a cable which is selected from

- a cable (A) comprising a conductor surrounded by at least a semiconductive layer comprising, preferably consisting of, the polymer composition; or

- a cable (B) comprising a conductor surrounded by an inner semiconductive layer, an insulating layer and an outer semiconductive layer, in that order, wherein at least one of the inner semiconductive layer or outer semiconductive layer comprises, preferably consists of, the polymer composition,.

The term "conductor" means herein above and below that the conductor comprises one or more wires. Moreover, the cable may comprise one or more such conductors. Preferably the conductor is an electrical conductor and comprises one or more metal wires.

"Semiconductive layer" means herein that said layer is formed from a polymer composition comprising carbon black and the polymer composition has a volume resistivity of less than 500 000 Ωcm, when measured at 90°C according to ISO 3915 (1981), more preferably less than 100 000 Ωm, even more preferably less than 50 000 Ωcm.

The cable is preferably a power cable selected from a LV, MV, HV or EHV cable. The cable (A) is preferably a LV or a MV cable. The cable (B) is preferably a MV cable, HV cable or EHV cable.

The outer semiconductive layer of the cable (B) can be bonded or strippable, i.e. peeleable, which terms have a well known meaning.

Preferred cable comprises a layer of a crosslinkable polymer composition.

Insulating layers for medium or high voltage power cables generally have a thickness of at least 2 mm, typically of at least 2.3 mm, and the thickness increases with increasing voltage the cable is designed for.

As well known the cable can optionally comprise further layers, e.g. layers surrounding the insulation layer or, if present, the outer semiconductive layers, such as screen(s), a jacketing layer(s), other protective layer(s) or any combinations thereof.

As already mentioned the cable is crosslinkable. Accordingly, further preferably the cable is a crosslinked cable (A), wherein at least one semiconductive layer comprises crosslinkable polymer composition of use in the invention which is crosslinked before the subsequent end use; or, and preferably, a crosslinked cable (B), wherein at least one of the inner or outer semiconducitve layer, most preferably at least the inner semiconducitve layer comprises crosslinkable polymer composition of use in the invention which is crosslinked before the subsequent end use.

The most preferred cable is the cable (B), which is a power cable and preferably crosslinkable. In such cable (B) at least the inner semiconductive layer comprises the polymer composition, as defined above or below, or in claims, including the preferred embodiments thereof. In this preferred embodiment of cable, the outer semiconductive layer may optionally comprise polymer composition of use in the invention which can be identical or different from the polymer composition of the inner semiconductive layer. Moreover, at least the polymer composition of the inner semiconductive layer is crosslinkable, preferably peroxide crosslinkable, and is crosslinked before the subsequent end use. Preferably also the insulation layer is crosslinkable and is crosslinked before the subsequent end use. The outer semiconductive layer may optionally be crosslinkable and thus be non-crosslinked or crosslinked, depending on the desired end application.

Also disclosed is a process for producing

(i) a cable (A) as defined above, wherein the process comprises the steps of

(a1) providing and mixing, preferably meltmixing in an extruder, the polymer composition as defined above;

(bl) applying a meltmix of the polymer composition obtained from step (al), preferably by (co)extrusion, on a conductor to form at least one semiconductive layer; and

(cl) optionally, and preferably, crosslinking the obtained at least one semiconductive layer in the presence of the crosslinking agent; or

(ii) a cable (B) as defined above comprising a conductor surrounded by an inner semiconductive layer, an insulation layer, and an outer semiconductive layer, in that order, wherein the process comprises the steps of

(a1)

- providing and mixing, preferably meltmixing in an extruder, a first semiconductive composition comprising a polymer, a carbon black and optionally further component(s) for the inner semiconductive layer,
- providing and mixing, preferably meltmixing in an extruder, a polymer composition for the insulation layer,
- providing and mixing, preferably meltmixing in an extruder, a second semiconductive composition comprising a polymer, a carbon black and optionally further component(s) for the outer semiconductive layer;

(b1)

- applying on a conductor, preferably by coextrusion,
- a meltmix of the first semiconductive composition obtained from step (al) to form the inner semiconductive layer,
- a meltmix of polymer composition obtained from step (a1) to form the insulation layer, and
- a meltmix of the second semiconductive composition obtained from step (a1) to form the outer semiconductive layer,

wherein at least one of the first semiconductive composition of the obtained inner semiconducitve layer and the second semiconductive composition of the obtained outer semiconductive layer, preferably at least the first semiconductive composition of the obtained inner semiconducitve layer, comprises, preferably consists of, a polymer composition as defined above.;
and (c1) optionally, and preferably, crosslinking the obtained at least one of the inner or outer semiconductive layer, preferably at least the inner semiconductive layer, comprising the polymer composition used in the invention in the presence of a crosslinking agent.

The term "(co)extrusion" means herein that in case of two or more layers, said layers can be extruded in separate steps, or at least two or all of said layers can be coextruded in a same extrusion step, as well known in the art. The term "(co)extrusion" means herein also that all or part of the layer(s) are formed simultaneously using one or more extrusion heads.

As well known a meltmix of the polymer composition or component(s) thereof is applied to form a layer. Meltmixing means mixing above the melting point of at least the major polymer component(s) of the obtained mixture and is carried out for example, without limiting to, in a temperature of at least 10-15°C above the melting or softening point of polymer component(s). The mixing step (al) can be carried out in the cable extruder. The meltmixing step may comprise a separate mixing step in a separate mixer, e.g. kneader, arranged in connection and preceding the cable extruder of the cable production line. Mixing in the preceding separate mixer can be carried out by mixing with or without external heating (heating with an external source) of the component(s).

The polymer composition can be produced before or during the cable production process. Moreover the polymer composition(s) of the layer(s) can each independently comprise part or all of the components of the final composition, before providing to the (melt)mixmg step (al) of the cable production process. Then the remaining component(s) are provided prior to or during the cable formation.

Accordingly, carbon black and the organic compound (b) can be mixed with the polyolefin (a), e.g. by meltmixing, and the obtained meltmix is pelletized to pellets for use in cable production. Pellets mean herein generally any polymer product which is formed from reactor-made polymer (obtained directly from the reactor) by post-reactor modification to a solid polymer particles. Pellets can be of any size and shape. The obtained pellets are then used for cable production.

Alternatively, all or part of the polyolefin (a), carbon black and the compound (b) used in the invention can be provided separately to the cable production line. E.g. carbon black and/or the compound (b) used in the invention can be provided in a well known master batch, to the mixing step (al) of the cable production process, and combined with the polymer component during the production process.

All or part of the optional other component(s), such as further polymer component(s) or additive(s) can be present in the polymer composition before providing to the mixing step (al) of the cable preparation process or can be added, e.g by the cable producer, during the mixing step (al) of the cable production process.

If, and preferably, the polymer composition is crosslinked after cable formation, then the crosslinking agent is preferably a peroxide, which can be mixed with the components of the polymer composition before or during mixing step (al). Preferably, the crosslinking agent, preferably peroxide, is impregnated to the solid polymer pellets of the polymer composition. The obtained pellets are then provided to the cable production step.

Most preferably, the polymer composition used in the invention is provided to the mixing step (al) of the cable production process in a suitable product form, such as a pellet product.

In case the polymer composition is silane crosslinkable then the crosslinking agent is typically not present in the polymer composition before the cable formation, but the crosslinking agent is usually added to the insulation layer

composition and after cable is formed the crosslinking agent migrates during the crosslinking step to the semiconductive layer comprising the polymer composition of use in the invention.

In the preferred cable production process the obtained cable (A) or cable (B) is crosslinked in step (cl).

As mentioned, the polymer composition is preferably crosslinkable and preferably the pellets of the polymer composition comprise also the peroxide before providing to the cable production line.

As above, the preferred cable production process is for producing a power cable (B).

Most preferably, the cable, preferably the power cable (B), is crosslinked after the formation of cable layers. In this preferred embodiment of the cable production process a power cable (B) is produced, wherein at least the inner semiconductive layer of cable (B) comprises the polymer composition as defined above or in claims and wherein the inner semiconductive layer, optionally, and preferably, the insulation layer and optionally the outer semiconductive layer of the cable (B) is crosslinked in the crosslinking step via radical reaction, preferably in the presence a crosslinking agent which is preferably a peroxide.

If the outer semiconductive layer is crosslinked, then said layer comprises, preferably consists of, the polymer composition as defined above or in claims. In such embodiment the polymer composition of the inner and outer semiconductive layer may be identical or different.

In above crosslinking process step (c1) crosslinking conditions can vary depending i.a. on the used crosslinking method, and cable size. The crosslinking is effected e.g. in a known manner preferably in an elevated temperature. A skilled person can choose the suitable crosslinking conditions e.g. for crosslinking via radical reaction or via hydrolysable silane groups. As non-limiting example of a suitable crosslinking temperature range, e.g. at least 150°C and typically not higher than 360°C.

## Determination methods

Unless otherwise stated the below determination methods were used to determine the properties defined generally in the description part and claims and in the experimental part.

Wt% means weight by %.

**Melt Flow Rate:** The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene and at 230 °C for polypropylene. MFR may be determined at different loadings such as 2.16 kg ($MFR_2$) or 21.6 kg ($MFR_{21}$).

Density: Low density polyethylene (LDPE): The density was measured according to ISO 1183-2. The sample preparation was executed according to ISO 1872-2 Table 3 Q (compression moulding).

Low pressure process polyethylene: Density of the polymer was measured according to ISO 1183/1872-2B.

## Comonomer contents

a) Comonomer content in random copolymer of polypropylene:

Quantitative Fourier transform infrared (FTIR) spectroscopy was used to quantify the amount of comonomer. Calibration was achieved by correlation to comonomer contents determined by quantitative nuclear magnetic resonance (NMR) spectroscopy.

The calibration procedure based on results obtained from quantitative $^{13}C$-NMR spectroscopy was undertaken in the conventional manner well documented in the literature. The amount of comonomer (N) was determined as weight percent (wt%) via:

$$N = k1\ (A / R) + k2$$

wherein A is the maximum absorbance defined of the comonomer band, R the maximum absorbance defined as peak height of the reference peak and with k1 and k2 the linear constants obtained by calibration. The band used for ethylene content quantification is selected depending if the ethylene content is random (730 $cm^{-1}$) or block-like (as in heterophasic PP copolymer) (720 $cm^{-1}$). The absorbance at 4324 $cm^{-1}$ was used as a reference band.

b) Quantification of alpha-olefin content in linear low density polyethylenes and low density polyethylenes by NMR spectroscopy:

The comonomer content was determined by quantitative 13C nuclear magnetic resonance (NMR) spectroscopy

after basic assignment (J. Randall JMS - Rev. Macromol. Chem. Phys., C29(2&3), 201-317 (1989)). Experimental parameters were adjusted to ensure measurement of quantitative spectra for this specific task.

Specifically solution-state NMR spectroscopy was employed using a Bruker AvanceIII 400 spectrometer. Homogeneous samples were prepared by dissolving approximately 0.200 g of polymer in 2.5 ml of deuterated-tetrachloroethene in 10 mm sample tubes utilising a heat block and rotating tube oven at 140 °C. Proton decoupled 13C single pulse NMR spectra with NOE (powergated) were recorded using the following acquisition parameters: a flip-angle of 90 degrees, 4 dummy scans, 4096 transients an acquisition time of 1.6s, a spectral width of 20kHz, a temperature of 125 °C, a bilevel WALTZ proton decoupling scheme and a relaxation delay of 3.0 s. The resulting FID was processed using the following processing parameters: zero-filling to 32k data points and apodisation using a gaussian window function; automatic zeroth and first order phase correction and automatic baseline correction using a fifth order polynomial restricted to the region of interest.

Quantities were calculated using simple corrected ratios of the signal integrals of representative sites based upon methods well known in the art.

c) Comonomer content of polar comonomers in low density polyethylene

(1) Polymers containing > 6 wt.% polar comonomer units

Comonomer content (wt%) was determined in a known manner based on Fourier transform infrared spectroscopy (FTIR) determination calibrated with quantitative nuclear magnetic resonance (NMR) spectroscopy. Below is exemplified the determination of the polar comonomer content of ethylene ethyl acrylate, ethylene butyl acrylate and ethylene methyl acrylate. Film samples of the polymers were prepared for the FTIR measurement: 0.5-0.7 mm thickness was used for ethylene butyl acrylate and ethylene ethyl acrylate and 0.10 mm film thickness for ethylene methyl acrylate in amount of >6wt%. Films were pressed using a Specac film press at 150°C, approximately at 5 tons, 1-2 minutes, and then cooled with cold water in a not controlled manner. The accurate thickness of the obtained film samples was measured.

After the analysis with FTIR, base lines in absorbance mode were drawn for the peaks to be analysed. The absorbance peak for the comonomer was normalised with the absorbance peak of polyethylene (e.g. the peak height for butyl acrylate or ethyl acrylate at 3450 $cm^{-1}$ was divided with the peak height of polyethylene at 2020 $cm^{-1}$). The NMR spectroscopy calibration procedure was undertaken in the conventional manner which is well documented in the literature, explained below.

For the determination of the content of methyl acrylate a 0.10 mm thick film sample was prepared. After the analysis the maximum absorbance for the peak for the methylacrylate at 3455 $cm^{-1}$ was subtracted with the absorbance value for the base line at 2475 $cm^{-1}$ ($A_{methylacrylate}$ - $A_{2475}$). Then the maximum absorbance peak for the polyethylene peak at 2660 $cm^{-1}$ was subtracted with the absorbance value for the base line at 2475 $cm^{-1}$ ($A_{2660}$ - $A_{2475}$). The ratio between ($A_{methylacrylate}$-$A_{2475}$) and ($A_{2660}$-$A_{2475}$) was then calculated in the conventional manner which is well documented in the literature.

The weight-% can be converted to mol-% by calculation. It is well documented in the literature.

Quantification of copolymer content in polymers by NMR spectroscopy The comonomer content was determined by quantitative nuclear magnetic resonance (NMR) spectroscopy after basic assignment (e.g. "NMR Spectra of Polymers and Polymer Additives", A. J. Brandolini and D. D. Hills, 2000, Marcel Dekker, Inc. New York). Experimental parameters were adjusted to ensure measurement of quantitative spectra for this specific task (e.g "200 and More NMR Experiments: A Practical Course", S. Berger and S. Braun, 2004, Wiley-VCH, Weinheim). Quantities were calculated using simple corrected ratios of the signal integrals of representative sites in a manner known in the art.

(2) Polymers containing 6 wt.% or less polar comonomer units

Comonomer content (wt.%) was determined in a known manner based on Fourier transform infrared spectroscopy (FTIR) determination calibrated with quantitative nuclear magnetic resonance (NMR) spectroscopy. Below is exemplified the determination of the polar comonomer content of ethylene butyl acrylate and ethylene methyl acrylate. For the FT-IR measurement a film samples of 0.05 to 0.12 mm thickness were prepared as described above under method 1). The accurate thickness of the obtained film samples was measured.

After the analysis with FT-IR base lines in absorbance mode were drawn for the peaks to be analysed. The maximum absorbance for the peak for the comonomer (e.g. for methylacrylate at 1164 $cm^{-1}$ and butylacrylate at 1165 $cm^{-1}$) was subtracted with the absorbance value for the base line at 1850 $cm^{-1}$ ($A_{polar\ comonomer}$ - $A_{1850}$). Then the maximum absorbance peak for polyethylene peak at 2660 $cm^{-1}$ was subtracted with the absorbance value for the base line at 1850 $cm^{-1}$ ($A_{2660}$ - $A_{1850}$). The ratio between ($A_{comonomer}$-$A_{1850}$) and ($A_{2660}$-$A_{1850}$) was then calculated. The NMR spectroscopy calibration procedure was undertaken in the conventional manner which is well documented in the literature, as described above under method 1).

The weight-% can be converted to mol-% by calculation. It is well documented in the literature.

**Melting temperature:** ISO11357-3: 1999: Plastics -- Differential scanning calorimetry (DSC) -- Part 3: Determination of temperature and enthalpy of melting and crystallization.

**The volume resistivity (VR) on strings** : was measured on strings which were extruded from the die during compounding as described in "Compounding Method 2" with the exception of that the material was not pelletised. The procedure was as follows: The strings had a diameter D between 1 and 10 mm, preferably around 3 mm, and a length L of 10 to 1000 mm, preferably around 100 mm. The diameter was measured using callipers and the length with a ruler, both recorded in centimetres. The resistance R was measured in ohms using an ohm-meter. The area A was calculated as A=π*(D/2)^2. The volume resistivity VR was calculated as VR=R *A/L.

**The volume resistivity (VR) on tapes:** was measured on extruded tapes prepared as described below under "Example series 1" The following procedure was used for VR measurement: The tape had a thickness h between 0.1 and 3 mm, preferably around 1 mm, a width w between 5 and 25 mm, preferably around 12 mnn and a length L of 10 to 1000 mm, preferably around 100 mm. The thickness and width was measured using callipers and the length with a ruler, both recorded in centimetres. The resistance R was measured in ohms using an ohm-meter. The area A was calculated as A=h*w. The volume resistivity VR was calculated as VR=R *A/L.

**The volume resistivity (VR) on cables:** The volume resisitivity of the semiconductive material is measured on crosslinked polyethylene cables according to ISO 3915 (1981). Cable specimens having a length of 13.5 cm are conditioned at 1 atm and 60 +/-2 °C for 5 +/-0.5 hours before measurement. To measure the resistance of the inner semiconductive layer, it is necessary to cut the cable in two halves, removing the metallic conductor. The resistance between the conductive silver paste applied onto the specimen ends is then used to determine the volume resistivity of the inner semiconductive layer. The measurements were carried out at room temperature and 90 °C.

**Experimental part**

The following components were used in the inventive examples of the polymer composition of the invention given below:

**Polar copolymer (EMA1):** A conventional copolymer of ethylene with methyl acrylate polymer produced in a tubular reactor of a high pressure polymerisation process, MFR (190°C, 2.16 kg) of 4 g/10 min. Methyl Acrylate (MA) content of 8 wt% and melt temperature Tm of 105 °C.

**Polar copolymer (EBA1):** A conventional copolymer of ethylene with butyl acrylate polymer produced in a tubular reactor of a high pressure polymerisation process, MFR (190°C, 2.16 kg) of 18 g/10 min. Butyl Acrylate (BA) content of 14 wt% and melt temperature Tm of 96 °C.

**Polar copolymer (EBA2):** A conventional copolymer of ethylene with butyl acrylate polymer produced in a tubular reactor of a high pressure polymerisation process, MFR (190°C, 2.16 kg) of 8g/10 min. Butyl Acrylate (BA) content of 17 wt% and melt temperature Tm of 96°C.

**Solid conductive carbon black (CB1):** A commercially available furnace black with the following properties:

| | | |
|---|---|---|
| Iodine number | : 160 [mg/g] | (ASTM D1510-07) |
| DBP absorption number | : 110 [ml/100g] | (ASTM D2414-06a) |
| Particle size | < 20 nm | (ASTM D3849-95a, procedure D) |

**Solid conductive carbon black (CB2):** A commercially available furnace black of N550 type with the following properties:

| | | |
|---|---|---|
| Iodine number | : 43 [mg/g] | (ASTM D1510-07) |
| DBP absorptionnumber | : 121 [ml/100g] | (ASTM D2414-06a) |
| Particle size | ~56 nm | (ASTM D3849-95a, procedure D) |

**Solid conductive carbon black (CB3):** A commercially available granulated acetylene carbon black with the following properties:

| | | |
|---|---|---|
| Iodine number | : 93 [mg/g] | (ASTM D1510-07) |
| DBP absorptionnumber | : 200 [ml/100g] | (ASTM D2414-06a) |
| Particle size | ~35 nm | (ASTM D3849-95a, procedure D) |

## Antioxidants

**(Compound (b), Comp (b)):** 4,4'-bis(1,1-dimethylbenzyl)diphenylamine, CAS:10081-67-1

**(Reference compound, Ref.comp),** TMQ: polymerized 2,2,4-trimethyl-1,2-dihydroquinoline, melt point: 80-135°C, CAS:26780-96-1

## Peroxide

**(POX):** di(tert-butylperoxyisopropyl)benzene, CAS: 25155-25-3

## Compounding and Extrusion

**Compounding Method 1.** The components of the examples were mixed by compounding on a Bolling mixer with counteracting rotors (supplier Kobelco). Typical temperature zones of the compounder during this compounding step ranged from 200 °C to 225 °C, and an extrusion temperature around 190°C. The obtained melt mix product was pelletized and the pellets of each example sample were used for the below determination methods.

**Compounding Method 2.** The components of the examples were mixed by compounding on a Buss MDK 46 kneader (supplier Buss, reciprocating co-kneader with special screw design). Typical temperature zones of the compounder during this compounding step ranged from 140 °C to 200 °C, and an extrusion temperature around 160°C. The obtained melt mix product was pelletized and the pellets of each example sample were used for the below determination methods.

**Power Cable Extrusion Scheme.** Cables with three layers have been made using the semiconductive composition as inner and outer layer. The middle insulation layer is formed of low-density polyethylene LDPE (MFR2=2 g/10 min) containing 2 wt-% of dicumyl peroxide as peroxide. The construction of the cables is 50 $mm^2$ stranded Al-conductor and 5.5 mm thick insulation. The inner and outer semiconductive layers have a thickness of 1 mm and 1 mm, respectively. The cable line is a catenary Nokia Maillefer 1+2 system, thus one extrusion head for the inner conducting layer and another for the insulation + outer semiconductive layer. The semiconductive layers have been extruded by a extruder of 45mm diameter and of a 24 length: diameter ration (L/D). The insulation layer has been extruded by a extruder of 60mm diameter and of a 24 L/D. The cables is cross-linked in the vulcanization tube under nitrogen and afterwards cooled in water. Cables were produced at different line speeds, ranging from below 2 to 3.3 m/min.

## Example Series 1

**Table 1** show the composition of the Inventive Example 1 and the Reference Example A, based on EMA and furnace black. The compounding of the materials was according to Compounding Method 1 described above. The materials were cooled to room temperature and subsequently tapes were extruded using a 20/25D mm single screw extruder with a screw configuration with low compression 1:1.5. The die dimension is 30 x 0.8 mm. Temperature settings are from 120°C to 125°C.

**Table 1. Composition and volume resistivity (measured on extruded tapes at 25°C) for Inventive Example 1 (InvEx 1) and Reference Example 1 (RefEx 1).**

| | | | InvEx1 | RefEx1 |
|---|---|---|---|---|
| EMA1 | | wt% | 64,3 | 64,2 |
| CB1 | | wt% | 35 | 35 |
| Comp (b) | | wt% | 0,7 | |
| Ref.comp. | | wt% | | 0,8 |
| Total | | wt% | 100 | 100 |
| VR | Tape, 25°C | ohm cm | 3,8 | 5,3 |

**Table 1** Table 1 shows that that the volume resistivity is more than 25% lower for the non-crosslinked composition InvEx1 containing compound (b) of the invention than the non-crosslinked comparative reference composition with compound TMQ, RefEx1. Both composition contains 35 wt% of the carbon black CB1 described above.

**Example Series 2**

Table 2 show the composition of the cables produced with Inventive Example 2 and the Reference Example 2. The materials were produced according to Compounding Method 1 described above. The peroxide was added to the semiconductive compositions after the compounding step. The concentration of peroxide is refers to the amount of the intermediate semiconductive composition. Power cables with a dimensions according to the rating of 20 kV was produced according to the Power Cable Extrusion Scheme described above.

**Table 2. Composition and volume resistivity of the inner semiconductive layer of 20 kV cable for Inventive Example 1 (InvEx 2) and Reference Example 1 (RefEx 2).**

| | | Temp | Line | | Inv Ex 2 | Ref Ex |
|---|---|---|---|---|---|---|
| | | °C | speed | | | 2 |
| EMA1 | | | | wt% | 63,66 | 63,56 |
| CB1 | | | | wt% | 34.65 | 34,65 |
| Comp. (b) | | | | wt% | 0,69 | |
| Ref.comp. | | | | wt% | | 0,79 |
| POX | | | | wt% | 1 | 1 |
| Total | | | | wt% | 100 | 100 |
| | | | | | | |
| VR | 20 kV cable | 25 | 2 | ohm cm | 51 | 117 |
| VR | 20 kV cable | 25 | 2,5 | ohm cm | 103 | 365 |
| VR | 20 kV cable | 25 | 3 | ohm cm | 185 | 394 |
| VR | 20 kV cable | 25 | 3,3 | ohm cm | 325 | 567 |
| VR | 20 kV cable | 90 | 2 | ohm cm | 708 | 2320 |
| VR | 20 kV cable | 90 | 2,5 | ohm cm | 1903 | 10415 |
| VR | 20 kV cable | 90 | 3 | ohm cm | 13261 | 32035 |
| VR | 20 kV cable | 90 | 3,3 | ohm cm | 27484 | 63999 |

shows the VR of the inner semicon at 25°C and 90°C of crosslinked 20 kV cables extruded according to above described Power Cable Extrusion Scheme at line speeds ranging from 2 m/min up to 3.3 m/min.

The VR is consistently much lower for the inventive semiconductive composition InvEx2with compound (b), InvEx 2, compared to the reference semiconductive composition with TMQ, RefEx 2, for all the tested line speeds and both temperatures. The VR of InvEx 2 is typically at least 40% of that of RefEx 2.

**Example Series 3**

Table 3 shows the composition of the cables produced with Inventive Example 3 and the corresponding Reference Example 3. The materials were produced according to Compounding Method 2 described above. The peroxide was added to the semiconductive compositions after the compounding step. The concentration of peroxide is refers to the amount of the intermediate semiconductive composition. Power cables with dimensions according to the rating of 20 kV was produced according to the Power Cable Extrusion Scheme described above.

Table 3. Inventive and reference compositions and the measured VR for inner semiconductive layer on 20 kV extruded cables.

| | | Temp | Line | | InvEx 3 | RefEx 3 |
|---|---|---|---|---|---|---|
| | | °C | speed | | | |
| EBA2 | | | | wt% | 59,70 | 59.60 |
| CB1 | | | | wt% | 38,61 | 38,61 |
| Comp. (b) | | | | wt% | 0,69 | |
| Ref.comp. | | | | wt% | | 0,79 |
| POX | | | | wt% | 1 | 1 |
| Total | | | | wt% | 100 | 100 |
| VR | 20 kV cable | 90 | 2 | ohm cm | 2783 | 3617 |
| VR | 20 kV cable | 90 | 2,5 | ohm cm | 6702 | 13049 |
| VR | 20 kV cable | 90 | 3 | ohm cm | 24375 | 94220 |
| VR | 20 kV cable | 90 | 3,3 | ohm cm | 75844 | 193400 |

Table 3 shows that the inventive semiconductive composition Inv.Ex.3 with Compound (b) the volume resistivity is lower than the corresponding reference composition with TMQ, Ref.Ex3. The VR for the inventive Example 3 is typically less than half of that of the corresponding Reference Example 3 and in all cases less than 80%

**Example Series 4**

Table 4 shows the composition of the cables produced with Inventive Example 4 and the corresponding Reference Example 4. The materials were produced according to Compounding Method 2 described above. The peroxide was added to the semiconductive compositions after the compounding step. The concentration of peroxide is refers to the amount of the intermediate semiconductive composition. Power cables with a dimension according to the rating of 20 kV were produced according to the Power Cable Extrusion Scheme described above.

Table 4. Inventive and reference compositions and the measured VR for inner semiconductive layer on 20 kV extruded cables.

| | | Temp °C | Line speed | | InvEx 4 | RefEx 4 |
|---|---|---|---|---|---|---|
| EBA1 | | | | wt% | 61,05 | 60,91 |
| CB2 | | | | wt% | 37,66 | 37,70 |
| Comp.(b) | | | | wt% | 0,39 | |
| Ref.comp. | | | | wt% | | 0,59 |
| POX | | | | wt% | 0.9 | 0.8 |
| Total | | | | wt% | 100 | 100 |
| VR | 20 kV cable | 90 | 2 | ohm cm | 14284 | 33619 |
| VR | 20 kV cable | 90 | 2,5 | ohm cm | 95996 | 652233 |

As shown in, InvEx4 with compound (b) gives a lower volume resistivity than the corresponding reference composition RefEx4 with TMQ.

**Example Series 5**

Table 4 shows the VR measurement from string samples of the Inventive Example 5 and the corresponding Reference Example 5 The materials were produced according to Compounding Method 2 described above. The string

samples were produced according to "The volume resistivity (VR) on strings" as described above under "Determination methods"

Table 5. Inventive and reference compositions and the measured VR on strings.

| | | | InvEx5 | RefEx5 |
|---|---|---|---|---|
| EBA1 | | | 64,2 | 64,2 |
| CB3 | | wt% | 35 | 35 |
| Comp.(b) | | wt% | 0,8 | |
| Ref.comp | | wt% | | 0,8 |
| Total | | wt% | 100 | 100 |
| VR | String , 25°C | ohm cm | 17,2 | 23,5 |

Table 5 shows that the inventive polymer composition with compound (b) have lower volume resistivity even with various type of carbon blacks. The semiconductive composition with compound (b) and acetylene black (as the solid conductive carbon black), i.e. InvEx5, have lower volume resistivity than the comparative reference compositions RefEx5 with TMQ.

In general, the enhancement effect on conductivity by the compound (b) depends on the composition. It is believed that the effect is generally more pronounced for compositions with loading close to the percolation threshold, i.e. a system with just one or very few conductive pathways through the system, Note that the percolation threshold depends on several factors, including the properties of the base resin and the carbon black but also the compounding conditions.

## Claims

1. Use of an organic compound (b) which is 4,4-bis(1,1'-dimethylbenzyl)diphenylamine to decrease the volume resistivity of a polymer composition for a semiconductive layer of a cable, wherein the polymer composition comprises:

   - a polyolefin (a) which is an LDPE homopolymer or copolymer; and
   - a carbon black which is selected from any of a furnace carbon black and acetylene carbon black having a nitrogen surface area (BET) of 5 to 400 $m^2/g$, determined according to ASTM D3037-93;

   wherein the polymer composition comprises 9.5 to 49.5 wt% carbon black and 0.35 to 0.9 wt% of the organic compound (b) based on the total amount of the polymer composition.

2. The use according to claim 1, wherein the polymer composition comprises the compound (b) in amount of 0.35 to 0.8 wt% based on the total amount of the polymer composition.

3. The use according to any of the preceding claims, wherein the polyolefin (a) is a LDPE copolymer of ethylene and one or more comonomers selected from polar comonomer(s), non-polar comonomer(s) or from a mixture of the polar comonomer(s) and non-polar comonomer(s).

4. The use according to any of the preceding claims, wherein the polyolefin (a) is a LDPE copolymer comprising ethylene and a C1-4 alkyl acrylate.

5. The use according to any of the preceding claims, wherein the polymer composition forms part of a cable which is selected from

   - a cable (A) comprising a conductor surrounded by at least a semiconductive layer comprising the polymer composition; or
   - a cable (B) comprising a conductor surrounded by an inner semiconductive layer, an insulating layer and an outer semiconductive layer, in that order, wherein at least one of the inner semiconductive layer or outer semiconductive layer comprises the polymer composition.

6. The use as claimed in claim 5, wherein the cable is a power cable.

## Patentansprüche

1. Verwendung einer organischen Verbindung (b), welche 4,4'-bis(1,1'-dimethylbenzyl)diphenylamin ist, um den spezifischen Volumenwiderstand einer Polymerzusammensetzung für eine halbleitende Schicht eines Kabels zu verringern, wobei die Polymerzusammensetzung umfasst:

   - ein Polyolefin (a), welches ein LDPE-Homopolymer oder -Copolymer ist; und
   - ein Ruß, welcher ausgewählt ist aus beliebigen aus einem Ofenruß und Acetylenruß mit einem Stickstoffoberflächenbereich (BET) von 5 bis 400 $m^2/g$, bestimmt gemäß ASTM D3037-93;

   wobei die Polymerzusammensetzung 9,5 bis 49,5 Gew.-% Ruß und 0,35 bis 0,9 Gew.-% der organischen Verbindung (b) auf Basis der Gesamtmenge der Polymerzusammensetzung umfasst.

2. Verwendung nach Anspruch 1, wobei die Polymerzusammensetzung die Verbindung (b) in einer Menge von 0,35 bis 0,8 Gew.-% auf Basis der Gesamtmenge der Polymerzusammensetzung umfasst.

3. Verwendung nach einem der vorstehenden Ansprüche, wobei das Polyolefin (a) ein LDPE-Copolymer von Ethylen und einem oder mehreren Copolymeren ausgewählt aus polaren Copolymer(en), nicht polaren Copolymer(en) oder aus einer Mischung aus den polaren Copolymer(en) und nicht polaren Copolymer(en) ist.

4. Verwendung nach einem der vorstehenden Ansprüche, wobei das Polyolefin (a) ein LDPE-Copolymer ist, welches Ethylen und ein C1-4 Alkylacrylat umfasst.

5. Verwendung nach einem der vorstehenden Ansprüche, wobei die Polymerzusammensetzung Teil eines Kabels ist, welches ausgewählt ist aus

   - einem Kabel (A), umfassend einen Leiter, welcher von zumindest einer halbleitenden Schicht umgeben ist, welche die Polymerzusammensetzung umfasst; oder
   - einem Kabel (B), umfassend einen Leiter, welcher, in dieser Reihenfolge, von einer inneren halbleitenden Schicht, einer isolierenden Schicht und einer äußeren halbleitenden Schicht umgeben ist, wobei zumindest eine von der inneren halbleitenden Schicht oder äußeren halbleitenden Schicht die Polymerzusammensetzung umfasst.

6. Verwendung nach Anspruch 5, wobei das Kabel ein Stromkabel ist.

## Revendications

1. Utilisation d'un composé organique (b) qui est de la 4,4'-bis (1,1'diméthylbenzyl)diphénylamine pour diminuer la résistivité volumique d'une composition polymère pour une couche semi-conductrice d'un câble, dans laquelle la composition polymère comprend :

   - une polyoléfine (a) qui est un homopolymère ou copolymère LDPE ; et
   - un noir de carbone qui est choisi parmi l'un quelconque d'un noir de carbone de four et d'un noir de carbone d'acétylène ayant une surface spécifique d'azote (BET) de 5 à 400 $m^2/g$, déterminée selon la norme ASTM D3037-93 ;

   dans laquelle la composition polymère comprend 9,5 à 49,5 % en poids de noir de carbone et 0,35 à 0,9 % en poids du composé organique (b) sur la base de la quantité totale de la composition polymère.

2. Utilisation selon la revendication 1, dans laquelle la composition polymère comprend le composé (b) en une quantité de 0,35 à 0,8 % en poids sur la base de la quantité totale de la composition polymère.

3. Utilisation selon l'une quelconque des revendications précédentes, dans laquelle la polyoléfine (a) est un copolymère LDPE d'éthylène et d'un ou plusieurs comonomères choisis parmi un ou des comonomères polaires, un ou des comonomères non polaires ou parmi un mélange du ou des comonomères polaires et du ou des comonomères non polaires.

**4.** Utilisation selon l'une quelconque des revendications précédentes, dans laquelle la polyoléfine (a) est un copolymère LDPE comprenant de l'éthylène et un acrylate d'alkyle en C1-4.

**5.** Utilisation selon l'une quelconque des revendications précédentes, dans laquelle la composition polymère fait partie d'un câble qui est choisi parmi

- un câble (A) comprenant un conducteur entouré d'au moins une couche semi-conductrice comprenant la composition polymère ; ou
- un câble (B) comprenant un conducteur entouré d'une couche semi-conductrice intérieure, d'une couche isolante et d'une couche semi-conductrice extérieure, dans cet ordre, dans laquelle au moins l'une de la couche semi-conductrice intérieure ou de la couche semi-conductrice extérieure comprend la composition polymère.

**6.** Utilisation selon la revendication 5, dans laquelle le câble est un câble d'alimentation.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006007927 A, Borealis
- EP 629222 A, Cabot
- US 4391789 A
- US 3922335 A
- US 3401020 A
- US 4340577 A


### Non-patent literature cited in the description


- *CHEMICAL ABSTRACTS,* 26780-96-1
- *CHEMICAL ABSTRACTS,* 10081-67-1
- Encyclopedia of Polymer Science and Engineering. 1986, vol. 6, 383-410
- Polyethylene: High-pressure. **R.KLIMESCH ; D.LITTMANN ; F.-O. MÄHLING.** Encyclopedia of Materials: Science and Technology. Elsevier Science Ltd, 2001, 7181-7184
- **J. RANDALL.** *JMS - Rev. Macromol. Chem. Phys.,* 1989, vol. C29 (2&3), 201-317
- **A. J. BRANDOLINI ; D. D. HILLS.** NMR Spectra of Polymers and Polymer Additives. Marcel Dekker, Inc, 2000
- **S. BERGE ; S. BRAUN.** 200 and More NMR Experiments: A Practical Course. Wiley-VCH, 2004
- *CHEMICAL ABSTRACTS,* 25155-25-3